# EUROPEAN PATENT SPECIFICATION

(11) **EP 0 632 904 B1**
(45) Date of publication and mention of the grant of the patent: **05.08.1998**
(21) Application number: 93906735.1
(22) Date of filing: 23.03.1993
(51) Int. Cl.: G01S 15/52, G01S 15/04, G08B 13/04

(54) **A DEVICE FOR AND METHOD OF SURVEILLANCE OF A SPACE**
VERFAHREN UND VORRICHTUNG ZUR RAUMÜBERWACHUNG
DISPOSITIF ET PROCEDE DE SURVEILLANCE D'UN ESPACE

(30) Priority: 24.03.1992 GB 9206360
(43) Date of publication of application: 11.01.1995
(73) Proprietor: ROVER GROUP LIMITED, Warwick CV34 6RG (GB)
(72) Inventor: BURDOCK, William, Sutton Coldfield, West Midlands B72 1JA (GB)
(74) Representative: Farrow, Robert Michael
(86) International application number: GB9300598
(87) International publication number: WO9319385

(56) References cited:
- EP-A- 0 058 205
- EP-A- 0 233 390
- EP-A- 0 368 303
- EP-A- 0 473 835
- DE-A- 3 226 517
- US-A- 4 088 989

## Description

The invention relates to a device for and method of surveillance of a space and is particularly, but not exclusively, concerned with an anti-theft device for a motor vehicle.

In particular, the invention is concerned with a device which makes use of a transmitter for transmitting a signal into a space to be monitored, the signal being reflected from the space and picked up by a receiver. The reflected signal is then processed to provide a reference. Where there is an intrusion into the space, the subsequent reflected signal will deviate from the reference and provided that there is a significant difference between the two signals the device will provide an appropriate indication such as an audible and/or visible alarm or electrical signal. Insignificant differences such as would be created, for example, by environmental changes will not normally be sufficient to trigger the indication.

In one type of prior system the signal is transmitted as a series of pulses which has a fairly low power consumption and enables moving objects to be detected. However, with such a system coverage is restricted to a defined area, it does not perform well where the space is defined by or includes highly absorbent interiors, the position of the transmitter and receiver is fairly critical for efficient operation, storing means for the reference requires a large amount of memory and it does not easily sense smaller and faster moving objects if environmental noise is significant. In another prior system, the signal is transmitted continuously and sets up a wave pattern in the space. With such a system there is a relatively greater coverage area, it is less sensitive to the nature of the space itself and its contents and can provide reliable sensing of fast moving objects. However the continuous transmission consumes more energy than intermittent pulses.

With prior art systems of either type, there are borderline areas where the system cannot differentiate between an intrusion which should trigger an alarm and a change which could be due to environmental variations. Increasing the sensitivity of the device can cause the device to be triggered by a change in temperature in the space, small moving objects such as flies and external noise. On the other hand, decreasing the sensitivity of the device renders the device incapable of sensing, say the breaking of a window or the arm of an intruder reaching into the vehicle and stealing a small article.

EP-A-0473835 discloses a surveillance method having two detection modes, namely Doppler-effect mode and echo-amplitude mode. Both modes must be entered before an alarm condition is raised.

EP-A-0233390 describes a method and apparatus for discriminating sounds due to the breakage of glass. The method described the identification of high and low frequency components of breaking glass and the measurement of a time delay between the low frequency energy pulse and the high frequency energy pulse.

One object of the present invention is to provide an improved device which will assist in overcoming the aforementioned problems.

According to one aspect of the present invention there is provided a device for providing surveillance of a space comprising a transmitter and a receiver, the device being arranged to operate in a first mode in which the transmitter transmits a signal into the space which is reflected from a surface and picked up by the receiver, processing means for processing the received signal to provide a reference comparator means for comparing the received signal with the reference and means for providing an indication when a significant change is detected, the device also being arranged to operate in a second mode in which the receiver picks up a different form of signal from the space for processing and comparison with a predetermined reference to determine whether an indication will be given, characterised in that a changeover from one mode to the other is effected only when the said change in the one mode does not provide sufficient certainty that said indication should be given and in that in the second mode the transmitter does not transmit a signal.

Therefore a device in accordance with the invention is advantageous over those of the prior art as it will switch from one mode to the other at times of uncertainty over whether or not an indication should be given so as to provide a double check on conditions in the space.

In the second mode, the transmitter is preferably arranged to transmit a different type of signal from that transmitted in the first mode. In that way the conditions in the space will be reflected differently to the receiver and so a borderline case of intrusion may show up more accurately as a result of one kind of transmission than under the other kind of transmission.

In the first mode, the transmitter may transmit its signal as a series of pulses, e.g. ultrasonic pulses. The pulses can then be reflected and picked up as a series of pulses by the receiver and processed to produce a reflection pattern. Processing means for doing that may comprise a first element such as a filter having a long time constant which will provide a reference pattern remaining substantially unaffected by sudden changes taking place within the space, and a second element such as a filter having a considerably shorter time constant which will produce a pattern responsive to sudden changes affecting the space. In that way, the first element can set up a long term pattern corresponding to the long term conditions within the space created by, e.g., positioning of normal surfaces and environmental effects and will update automatically as environmental changes take place. On the other hand, the second element will provide, for example, a rapid indication of the presence of another surface such as an intruder which will immediately affect the pattern processed by the second element so that when comparison is made with the reference pattern by a detection algorithm a change will be detected.

When transmitting the pulses, the receiver will pick up not only reflections from the space but will also be directly mechanically coupled to a certain extent through components on which both the transmitter and receiver are mounted. Also there will also be a certain amount of acoustic coupling directly from the transmitter to the receiver. Therefore, in order to prevent the effects of acoustic and mechanical coupling from affecting the reflected energy it is preferable that the subsequent pattern is compared with the reference pattern after a time lapse has occurred from the transmitted pulse, said time lapse being sufficient for a directly coupled signal from the transmitter to the receiver substantially to cease.

In the second mode, the transmitter can be arranged to transmit its signal as a continuous signal or as a relatively long burst of predetermined duration which is reflected from a surface and picked up by the receiver for processing to provide said further reference as a reference level. said comparator means being arranged to compare the received and processed signal a predetermined reference level.

In the second mode, where the transmitter transmits it signal as a continuous signal or as a relatively long burst of predetermined duration. the frequency content of the amplitude modulated received signal or phase modulated received signal can be analysed to detect whether or not there has been any disturbance within the space. Moreover, the system can read the long term conditions within the space and detection algorithms can be adjusted to allow the device to accommodate different environmental conditions. This procedure will normally be carried out when the unit is initially switched on or when it is necessary to re-set the system.

Where the transmitter transmits pulses in the first mode and transmits a continuous signal or a relatively long burst of predetermined duration in the second mode, a device in accordance with the invention brings together in a single system the advantages of the prior art using transmitted pulses and the prior art using continuous transmission. Therefore, where there is an intrusion into the space with the system in a pulse transmission mode but the system is unable to detect with certainty if an alarm should be given, the device will switch to the continuous or burst transmitted signal mode so that the intrusion can be read using a different form of transmission.

As an alternative proposal, the receiver can become passive to render the device sensitive to a signal resulting from the sound of breaking or fracturing of brittle materials such as glass or high energy impacts on materials associated with the space.

The passive mode of the system is most useful as it enables the sound of breaking glass to trigger an indication such as an alarm where the breaking of the glass does not provide sufficient certainty in either of the other modes than an indication should be given.

According to a second aspect of the invention, a device for providing surveillance of a space comprising a transmitter and a receiver, the device being arranged to operate in a first mode in which the transmitter transmits a continuous signal or relatively long burst of a predetermined duration into the space which is reflected from a surface and picked up by the receiver, processing means for processing the received signal to provide a reference, comparator means for comparing a change in the received signal with the reference and means for providing an indication when a significant change is detected, the device also being arranged to operate in a second mode in which the transmitter transmits a signal as a series of pulses which is reflected by a surface and picked up by the receiver from the space for processing and comparison with a further reference such that where there is a change in the received signal which exceeds said further reference by a significant amount an indication will be given, characterised in that a changeover from one mode to the other is effected only when the said change in the one mode does not provide sufficient certainty that said indication should be given.

The device described in the above paragraph may also be arranged to be operable in a third mode in which no signal is transmitted by the transmitter and the receiver becomes passive to render the device sensitive to a signal resulting from the sound of breaking or fracturing of brittle materials such as glass or high energy impacts on materials associated with the space.

If desired a plurality of transmitters and a plurality of receivers can be provided.

The system is ideally suited as an alarm system or anti-theft device for a motor vehicle.

The invention also includes aspects relating a method of providing surveillance of a space.

According to a first method aspect there is provided a method of providing surveillance of a space comprising transmitting a signal into the space in a first mode for reflection from a surface, receiving and processing the reflected signal to provide a reference, comparing a subsequently received and processed signal with the reference and providing an indication when a significant change is detected and the method includes selecting a second mode, picking up a different form of signal from the space and comparing the received and processed signal with a predetermined reference to determine whether an indication should be given, characterised by the second mode being selected only where said change does not provide certainty that said indication should be given and the second mode being a mode in which a signal is not transmitted.

Preferably, the method includes creating a time lapse from cessation of the transmitted pulse to the time when a comparison with the reference pattern is made, said time lapse being sufficient for a directly coupled signal from the transmitter to the receiver substantially to cease.

Preferably, the method further includes processing the reference to establish a point at which the reflected signal diminishes below a predetermined level and transmitting a subsequent pulse close to a or at a predetermined time after the point at which the reflected signal diminishes below the said predetermined level.

According to a second method aspect, there is provided a method of providing surveillance of a space comprises transmitting a signal as a series of pulses into the space in a first mode for reflection from a surface, receiving and processing the reflected signal to provide a first reference, comparing a subsequently received and processed signal with the reference and providing an indication when a significant change is detected, selecting a second mode, picking up a different form of signal from the space and processing that signal, comparing the received and processed signal with a predetermined reference and providing an indication where the reference is exceeded by a significant amount characterised by the second mode being selected only where said change does not provide certainty that said indication should be given.

Advantages of the foregoing method aspects will be apparent from statements of advantage relating to aspects of the invention set out above and concerned with the device.

The invention will now be more particularly described with reference to the accompanying drawings, in which:-
Fig.1 is a diagram depicting operation of one form of a pulse transmission prior device,
Fig.2 is a diagram depicting operation of a continuous or burst signal transmission device.
Fig.3 is a diagram depicting operation of a device in accordance with the present invention,
Fig.4 is a circuit block diagram showing the layout of a device in accordance with the invention,
Fig.5 is a circuit block diagram for a pulses transmission first mode of operation,
Fig.6 is a graph illustrating the way in which an ultrasonic pulse can set up a simple reflected signal within a space,
Fig.7 is a graph showing a more complex reflected signal as would be expected within the driver/passenger compartment of a vehicle,
Fig.8 is a graph showing the way in which a time lapse is defined between transmission of a pulse and the monitoring of the reflected signal,
Fig.9 is a graph showing the way in which the system, when setting up initially, gradually reduces the timing between samples to an optimum,
Fig.10 is a graph showing the relation between environmental noise and noise caused by, say, intrusion or the like which could give rise to an alarm condition,
Fig.11 is a circuit block diagram for a continuous or burst transmission for the second mode of operation,
Fig.12 is a graph showing a steady state received signal in response to the continuous transmission,
Fig.13 is a series of graphs illustrating the processing of received signals in the second mode of operation,
Fig.14 is a graph showing various curves relating to signals received in the second mode,
Fig.15 is a graphical representation of a sound pulse resulting from a glass window being broken, and
Fig.16 is a circuit block diagram for a passive mode of operation.

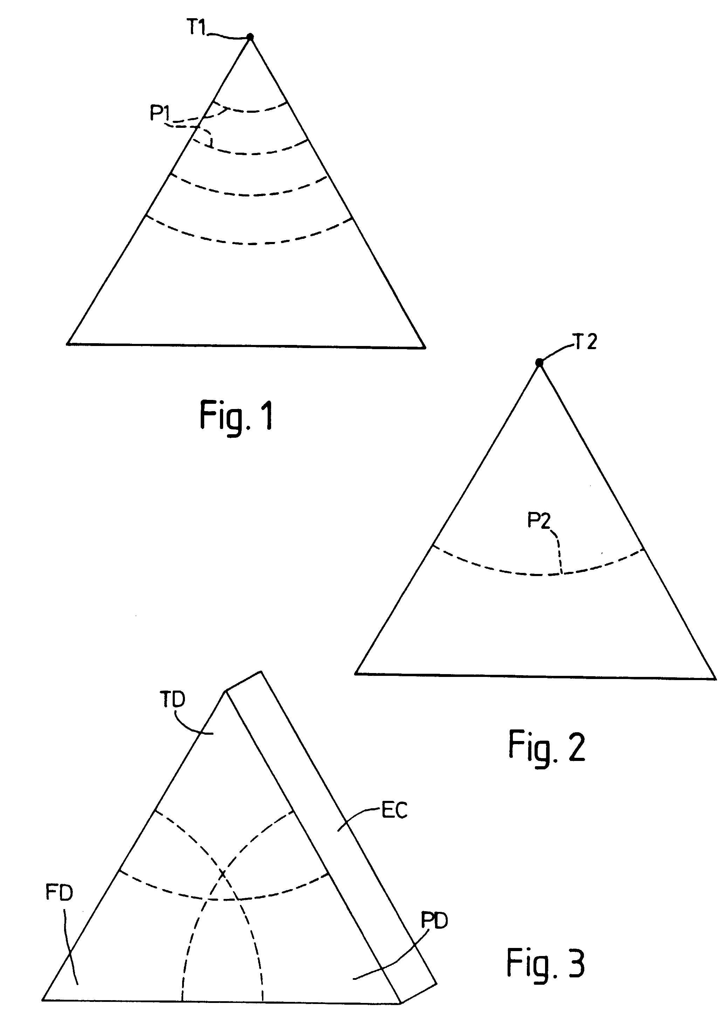

With reference to Figs.1 and 2, current anti-theft devices for use in vehicles and which use an ultrasonic transmitter signal use either the transmission of ultrasonic pulses P1 as in Fig.1 from a transmitter T1 (referred to herein as time domain) or use a continuously transmitted signal P2 as in Fig.2 from a transmitter T2 (referred to herein as frequency domain).

A time domain operation as in Fig.1 is suitable for sensing movements within a defined space in the vehicle but may not detect, for example, the insertion into the vehicle of an arm of an intruder and the removal of small objects where the intrusion is shielded by, for example, seating in the space.

A frequency domain system as in Fig.2 is aimed primarily at sensing fast movements within the vehicle and, therefore, may fail to sense accurately the gradual opening of a window or door and the gradual entry of an intruder into the vehicle.

Neither domain is ideal for accurately detecting the breaking of a car window.

In accordance with one aspect of the present invention it is proposed to provide a more accurate and anti-theft device which combines at least one of the time domain TD and frequency domain FD modes with a passive mode PD. Fig.3 shows a combination of all three modes.

In that way, the advantages of the time domain and/or frequency domain systems are present in a single anti-theft device with the additional advantage of glass breakage detection in the passive mode as will be described later. Moreover, in accordance with the present invention, it is proposed to monitor environmental changes which affect the space and adapt the device accordingly to take those changes into account thereby adding a dimension EC to Fig.3.

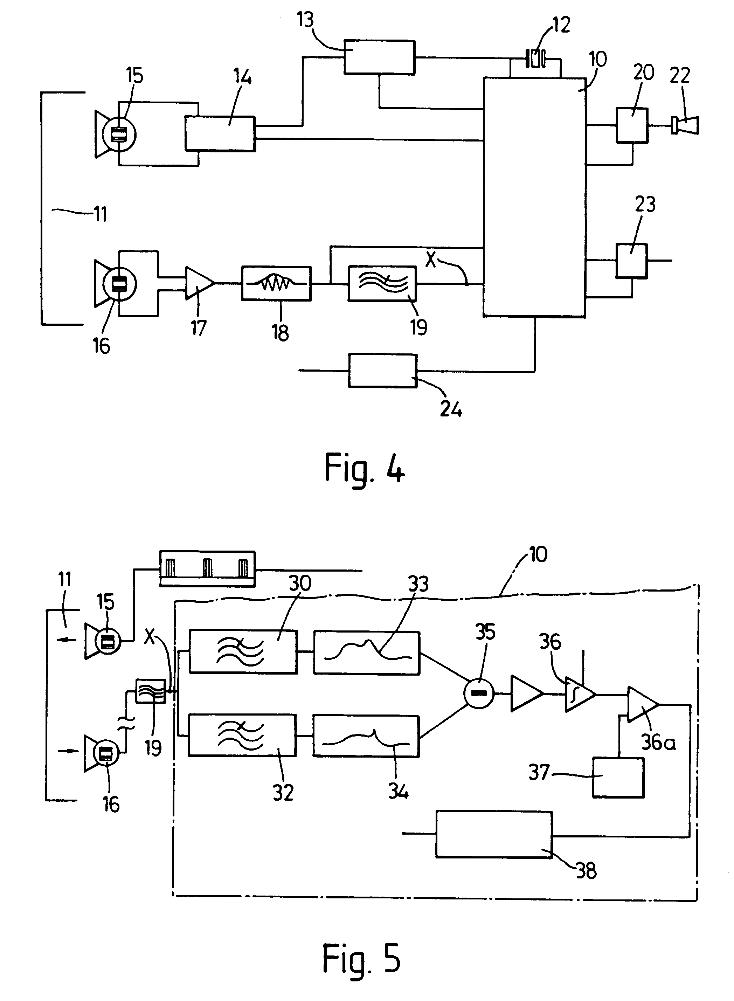

Fig.4 is a block diagram of the device from which it will be seen that the device is under the overall control of a microprocessor 10 which is programmed with algorithms for performing calcuiations associated with the transmitted and received signals. The microprocessor may incorporate on-chip peripheral devices such as an analogue-to-digital convertor. The microprocessor 10 has a clock signal generated internally with a crystal 12, or ceramic resonator, the signal being processed by a divider 13 to produce, for example, a 40KHz square wave for driving a push-pull output stage 14. The push-pull output stage drives a transmitter 15 and the microprocessor 10 controls the divider 13 and the push pull driver 14. This allows the transmitter 15 to be turned off and the output power from the transmitter to be reduced by switching from push-pull output stage into a single sided driver.

An output signal from the transmitter 15 is directed into a space 11 and reflections of the signals are picked up by a receiver 16. The output from the receiver 16 will normally be only a few millivolts and will require substantial amplification before it can be used by the microprocessor 10. Therefore, an amplifier 17 amplifies the signal from the receiver to a suitable voltage level for an amplitude de-modulator 18 which produces a DC voltage related to an envelope of the 40KHz reflected waveform. The output from the de-modulator 18 is passed directly to the microprocessor 10 and also to a second order low pass anti-aliasing filter 19. The cut off frequency for the filter 19 is determined according to the maximum sampling rate of an analogue to digital converter in the microprocessor 10 and the bandwidth required. The gain of the amplifier 17 is controlled by the microprocessor 10 in addition to varying the transmitter output. In that way, the optimum signal can be obtained without signification degradation of the signal to noise ratio.

An input/output port 20 is provided in the microprocessor 10 for an alarm 22. A further output port 23 may be provided for communication through a line with other anti-theft modules in accordance with the invention.

The receivers of the modules could either be switched on together to monitor the complete field over a large volume or selected receivers could be activated to look at specific regions covered by associated transmitters. This feature is useful in that it will allow comprehensive coverage, say, of a complete vehicle irrespective of size and internal configuration. A vehicle such as a cross-country four-wheel drive type may be too large for a single transmitter/receiver arrangement to cover the complete interior of the vehicle in a satisfactory manner. Two interconnected modules could then be useful and could operate sequentially so that the signal from the transmitter of one module of the system would not interfere in any way with the transmitted signal from the other.

In addition or as an alternative to the line from the input/output port 23 providing communication with a further module of the device, the line could interface the device with any other compatible ECU on the vehicle for either enhanced performance or on-board diagnostics. Alternatively, the line from the input/output port 23 could be used as a digital switch input or low current open coilector output for switching small loads.

Under all modes of operation, the input/output ports 20, 23 will be protected against damage by misconnections and adverse operational conditions.

The system is driven by a suitable voltage supply which is controlled by a voltage stabiliser 24.

In order to improve coverage of the vehicle, a multiplexer (not shown) may be arranged between the transmitter 15 and receiver 16. Since suitable transmitters and receivers are similar in construction and performance, a microprocessor could be arranged to select which transducer will be the receiver or transmitter. Since the transducers would not produce identical field patterns when transmitting, the coverage of the vehicle interior would be more comprehensive.

### TIME DOMAIN MODE

When operating in the time domain mode, the transmitter 15 transmits a short ultrasonic signal into the vehicle and the signals are reflected from the vehicle interior to be picked up by the receiver 16.

Reference is now made to Fig.5 where point X corresponds to point X indicated in Fig.4.

From point X incoming signals are applied to a first filter 30 having a long time constant and a second filter 32 which has a considerably shorter time constant.

The filter 30 is referred to herein as a "reference filter" and the filter 32 is herein referred to as the "live filter".

The reference filter provides a reference pattern 33 which gives a long term pattern of the prevailing conditions of the vehicle interior. As environmental changes such as increases in temperature will have an effect on the system and bearing in mind that the increase in temperature takes place over a period of time, the reference pattern will gradually change to take into account such temperature changes. Also, if other environmental variations occur, for example a change in weather conditions leading to wind blowing over the vehicle, the reference filter will take that into account.
Therefore, by use of the reference filter, the system automatically adjusts itself for long term environmental changes.

The live filter provides a live pattern 34 which changes rapidly in response to any variation in signals picked up by the receiver 16.

In a steady state condition where there is no intrusion in the space, the reference and live patterns 33, 34 will correspond to each other and the difference between them sensed by a subtractor 35 which tends towards zero. Where there is a change in the live pattern, a difference in output will be sensed by the subtractor 35 and the output of the subtractor is then integrated by an integrator 36 and passed to an integrator comparator 36a which receives a threshold level from microprocessor software 37. The output from the integrator comparator 36 is then passed to an integrator output processor 38 which triggers the alarm 22 when the difference between the reference and live patterns is significant.

The interior of the vehicle will generally be constructed from various materials that exhibit different levels of absorption and reflection of ultrasonic energy. Therefore, the transmitted ultrasonic signals will result in reflections scattered around the interior of the vehicle to provide a unique reflected pattern for any particular set of vehicle conditions.

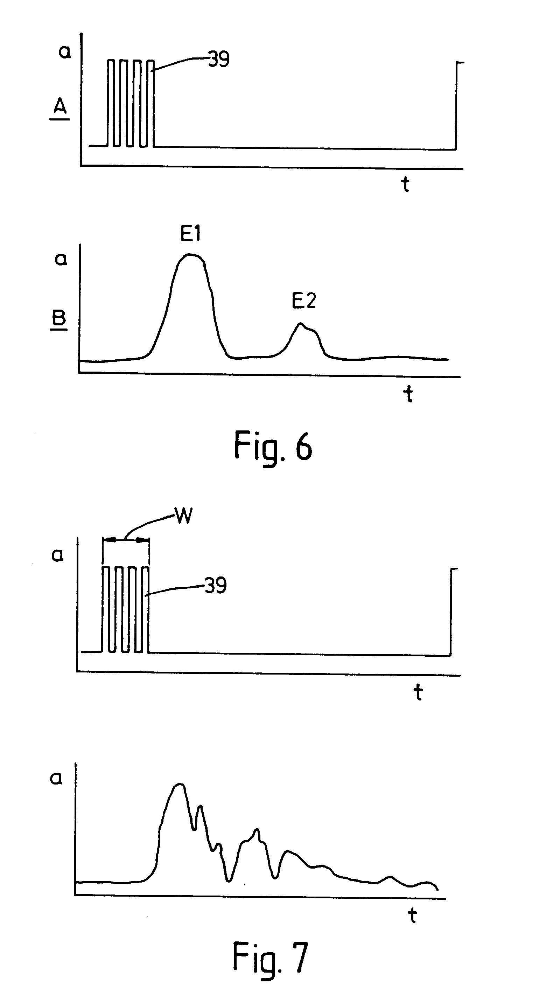

Reference is made to Fig.6 which shows (in upper graph A) a burst 39, e.g. 40kHz, of ultrasonic sound. Graph B shows the amplitude of the simple reflection of the ultrasonic burst indicating primary and secondary reflections E1, E2. The second reflection E2 could be produced by the primary reflection E1 after it has travelled around the vehicle interior again. For hard flat surfaces like glass and smooth plastics, the loss of ultrasonic energy at the surface will be small whilst softer materials such as upholstery and leather will result in a greater loss of transmitted ultrasonic energy. Therefore, the normal pattern of reflected energy will be more complex than that shown in Fig.6 and is more likely to be somewhat as shown in Fig.7.

In Fig.7, the complex reflected pattern has several peaks each of which will be generated by a pulse 39 reflecting off one or more surfaces before it reaches the receiver 16. The amplitude and time spacing of the received reflected signals are dependent on materials in the vehicle and the distance the pulse has to travel. As the distance between the transmitter and material from which this signal is reflected increases, the interval between the transmitted and received pulse increases and will lead to increased attenuation of the signal. In practice, the device can be tuned to detect reflected signals which reach the receiver 16 over a particular time so that, for example, a reflected signal reaching the receiver outside that time setting will be ignored for the purposes of analysis. With a narrow transmission pulse 39, the corresponding received pulses are found to be well defined and of similar widths as apparent from Fig.6.

If desired, the transmitted pulse width W can be either increased or decreased to provide the optimum amplitude of received signals and to control the number of detectable reflected pulses e.g., as shown in Fig.6. However, if the pulse width is increased excessively, multiple reflections or echoes may be produced and so for optimum operation in the time domain mode, the transmission pulse width is selected to give the best compromise between the amplitude of the received signals and the definition of received signal pulses.

In addition to varying the width of the pulse 39, it has been found that a similar effect on the received signals can be achieved by varying the amplitude of the transmitted signal. The transmitted pulse 39 will be quickly attenuated as it moves towards and strikes surfaces. Therefore, a low amplitude transmission may result in detectable reflection from low loss surfaces only where they are close to the transducers 15, 16. By increasing the amplitude of the pulse 39, a better coverage of the vehicle interior can be attained and a greater reflected signal to environmental noise ratio achieved. However, excessive increase in transmitted pulse amplitude can again result in a less stable reflected pattern as one or more of the reflected pulses may combine to either reinforce or cancel out the received reflected signal depending on the phase of the transmitted pulse. Therefore, the transmitted pulse is controlled so that the amplitude and pulse width are selected to give the best compromise.

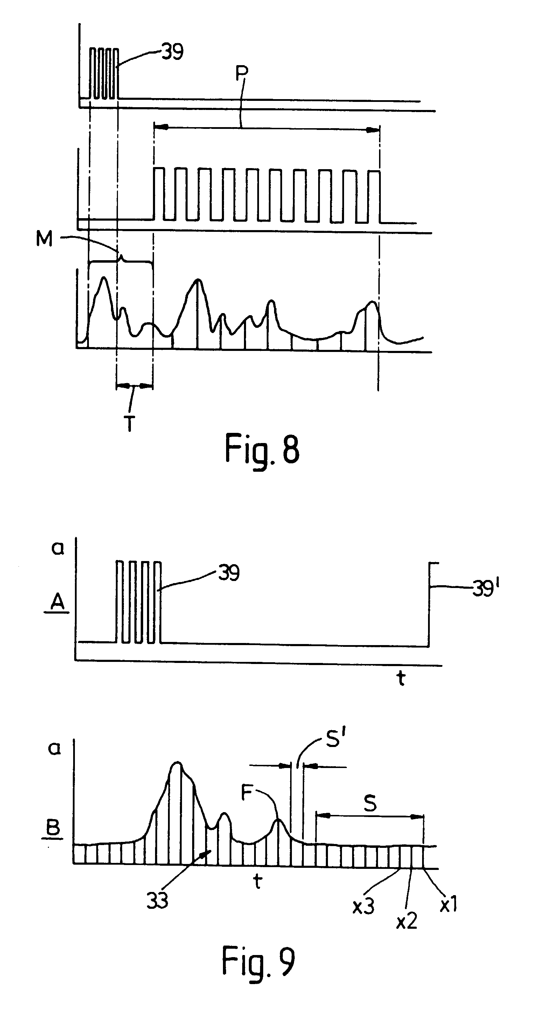

When the transmitter 15 transmits the pulse 39 into the vehicle, there will be a certain amount of acoustic coupling where the receiver 16 picks up some of the ultrasonic signal directly from the transmitter 15 (acoustic coupling) and there will also be a certain amount of mechanical coupling through common mounting structure for the transmitter 15 and receiver 16. The signals picked up by the receiver 16 due to the acoustic and mechanical coupling will normally be received fractionally before the reflected signals begin to reach the receiver. Therefore, to prevent the effects of acoustic and mechanical coupling from distorting the live pattern 34 generated by reflected signal, it is proposed to delay onset of sampling the received signals to give time for signals over period M resulting from the acoustic and mechanical coupling to attenuate. Such timing is illustrated in Fig.8 where there is a time delay T from the cessation of the transmitted pulse 39 to the start of a sampling period P. The time delay T will be calculated by the microprocessor 10.

Once the initial pulse width, amplitude and period T have been set, then the sampling period P can be determined by monitoring the received signal for a pre-determined period after which the reflected signal substantially attenuates. For a range of vehicles, the maximum time taken for a pulse 39 to be transmitted and reflected from primary surfaces e.g. front and rear screens, can be calculated for determination of the maximum sampling period P.

When the system is initial setting after being switched on, the sampling period P can be set to correspond to the maximum time calculated for the transmission, reflection and reception of a pulse in the vehicle. After a reflection pattern has been digitised and stored in the system, it may well be possible to reduce the sampling period P for a particular vehicle and environment and that is achieved by taking the difference between the last two sampled points x1, x2 in Fig.9 in a reflected image pattern each time the sampling period is changed and tests made, for a change in amplitude resulting in a change of gradient in the reference image 33. During the period marked S in Fig.9, there is no gradient change as the reflections have attenuated. The next pulse 39' is then brought forward to test for a gradient change between x2 and x3 and so on until during period S' a change in gradient due to a final pattern fluctuation F will be sensed and the sample period thereby defined. Thereafter a pulse is transmitted as close as possible to the end of the sampling period. By that method, there is a minimum amount of what can be term "dead time" between the attenuation of pattern fluctuations and the transmission of the next pulse 39.

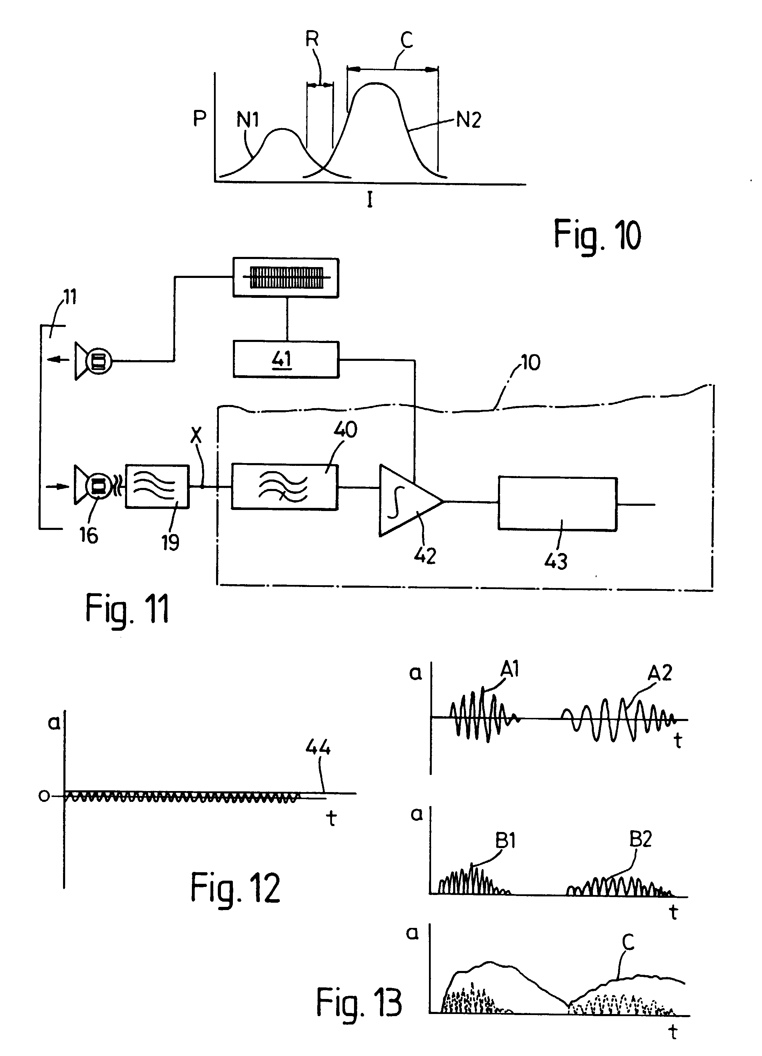

Fig.10 is a graph of probability P against signal intensity I and serves to illustrate the difference between possible disturbance conditions e.g. due to environmental effects, and conditions where the system is either confident or not confident to trigger the alarm.

In Fig.10, a curve N1 illustrates distribution of long term environmental noise which would be registered by the reference filter 30 and the curve N2 represents the distribution of noise which leads to the triggering of an alarm condition and is programmed into the microprocessor 10. Therefore, the curve N2 is predetermined whilst the curve N1 varies depending on environmental changes.

Where the difference between the live and reference images 33 and 34 produces a difference which lies within zone C of curve N2 the system will trigger an alarm condition. However, the system is set to provide a reference level indicated by zone R providing a low confidence zone in which the system may not clearly discern between environmental noise and deviation from a steady state condition due to an intrusion. Where the difference between the reference and live images 33 and 34 results in a signal falling within zone R, the system is arranged to switch over to the frequency domain mode to enable the space 11 to be monitored using a different form of transmitted signal which may then provide certainty over whether or not an alarm should be triggered.

### FREQUENCY DOMAIN MODE

The frequency domain uses a continuously transmitted signal of, e.g., ultrasound, or a burst of e.g., ultrasound which is substantially longer than that of a pulse used in the time domain mode to set up a field within the vehicle interior.

With reference to Figs.11 to 13, point X in Fig.11 corresponds to point X in Fig.4. The signal picked up by the receiver 16 passes through a high pass filter 40, through an integrator 42 and through an integrator output processor 43 to provide a demodulated constant DC level 44 at a steady state condition in the space 11. The DC level reflects the amplitude of the signal picked up by the receiver 16 and will vary with, for example, environmental changes. Preferably, the integrator 42 and integrator output processor 43 are the same components as components 36 and 38 in Fig.5 so that common components are used as far as possible for time frequency domain modes. A timing control 41 is provided.

When the ultrasonic field is disturbed, the amplitude of the received signal will be modulated by the changes in absorption, reflection and dispersion of the ultrasonic signal. The frequency content of the de-modulated received signal will be dependent upon the disturbance of the ultrasonic field. For example, low speed movement of air or surfaces within the space will result in low frequencies as shown in graph A2 of Fig.13 (showing amplitude a against time t graphs) while rapid movements will generate higher frequencies as shown in Fig.13 graph A1. The signals shown in graphs A1 and A2 are rectified as shown in graphs B1 and B2 in Fig.13 and are then demodulated and integrated to provide a final signal C which is compared to a calculated threshold dependent on conditions in the space 11 and the difference will be used to trigger an alarm where the difference is significant.

The size of the disturbance will have an effect on the received signals because the reflection patterns which are set up in the vehicle will normally be constructed from a large number of individual reflected wave fronts. The resultant wave at the receiver 16 will change in amplitude and phase with respect to the transmitter when some or all of the wave fronts generated by the transmitted signal are disrupted from their normal paths.

There will be a phase relationship between the received signal and transmitted signal which contains similar information to the amplitude modulated signal as shown in Graphs A1 or A2. The phase modulated signal can be processed in a similar way to provide a measure of any disturbance in the space 11.

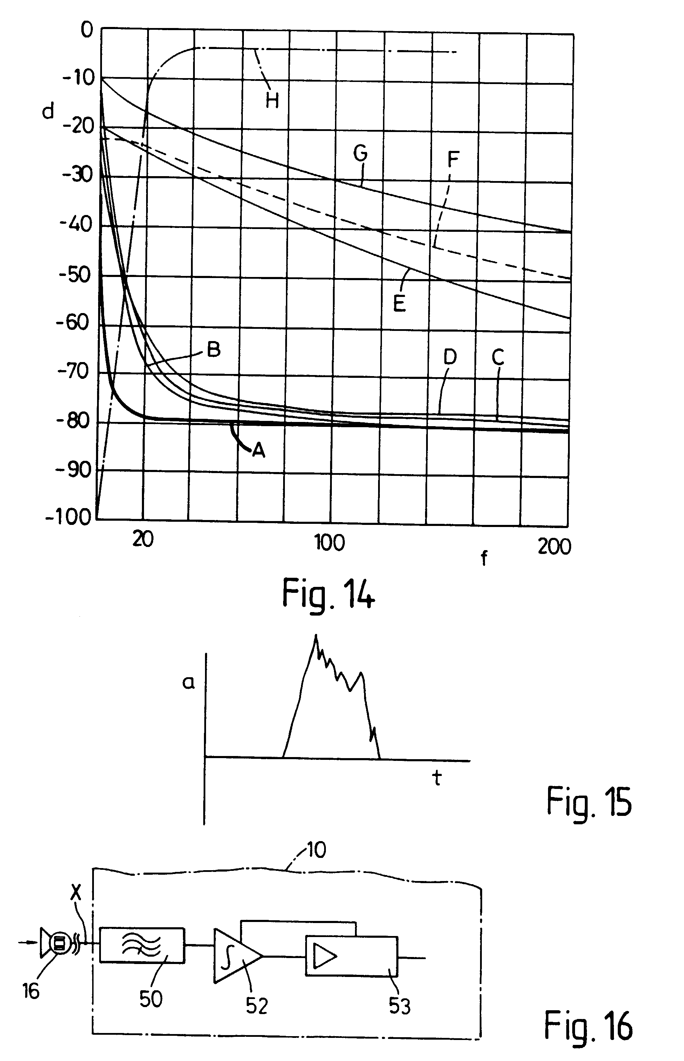

Fig.14 illustrates various frequency domain response curves which help to show the area in which the frequency domain mode can be usefully applied during operation of the device. The curves represent amplitude of the received signal d against frequency f.

Curve A illustrates the frequency domain mode spectrum of background noise. Curve B shows the spectrum of vehicle cooling. Curve C shows the spectrum of a slow movement of an arm reaching into and removing a small item from a seat of the vehicle and curve D shows the spectrum of simulated external wind blowing over the vehicle air intakes. It can be seen that for slow intruder movements, thermal effects and external wind blowing over the air intakes of the vehicle, the differences in response are relatively small and could easily be confused with each other. However, curves E, F and G show respectively typical normal movement inside a vehicle, normal door opening and closing and what could be regarded as normal movement through a vehicle window. In the latter case, the movement represents an intruder reaching in and removing a small item from the seat over a total time of approximately 3 seconds.

Therefore, it can be clearly seen that where conditions E, F and G prevail, the frequency domain mode normally can readily distinguish such conditions from both the background condition and environmental effects. The region between the two sets of curves is well defined in Fig.14. However, with different vehicles, the environmental response may increase in both frequency content and amplitude with adverse external conditions.

To extract information from the frequency domain signal, it is necessary to filter out the low frequency noises where all of the curves lie in close proximity. It is, therefore, proposed to provide a filter 40 having a characteristic curve H as shown in broken lines in Fig.14. After filtering the signal from the detector 18, the intruder related frequencies can be analysed to determine the duration and size of the disturbance and compared with background reference levels. Where the difference is significant an alarm condition will be given.

When the system is disturbed either in the time domain mode or the frequency domain mode, the breaking of a window in the vehicle or a high intensity impact, may not have an effect on the reflected signal sufficiently significant to take the system to the alarm state. Therefore, it is proposed to provide a passive mode sensing by disabling the transmitter 15 to allow the detection of high frequency impulses generated by, e.g., breaking glass.

### PASSIVE MODE

For the passive mode, the transmitter 15 is switched off completely and the system monitors the receiver 16 for a short duration of high amplitude bursts as shown in Fig.15 which illustrates the shape of a curve representing the sound of breaking glass, as heard by the transducer 16, the curve being based on amplitude a against time t.

Reference is made to Fig.16 in which point X in the diagram corresponds to point X in Fig.4.

A signal picked up by the receiver 16 passes through a highpass filter 50, through an integrator 52 and an integrator output processor and comparator 53 which processes the input from the integrator 52. Also, the processor 53 provides an integrator re-set signal. Preferably, the same circuitry can be used for the time domain, frequency domain and passive domain modes of operation.

The impulse generated when the glass is struck may contain several large transient peaks and that could increase the possibility of the passive mode triggering a false alarm signal. To overcome this, the output from the detector 18 is filtered by filter 50 to substantially remove the high frequency transient peaks thereby providing a smoothed envelope of the impulse. The output is then integrated and compared in the integrator output processor/comparator 53 with a simple reference level programmed into the microprocessor 10 to determine if an alarm condition has occurred. The system can be re-set after an alarm condition to allow it to re-arm without immediately false alarming.

One strategy for switching between all three modes is as follows :-
1. Enable the ultrasonic components of the system.
2. Enter Passive mode.
3. If an intrusion is detected with a high degree of confidence then raise an alarm and return to step 2.
4. If an intrusion is detected with a low degree of confidence then attempt to arm Time Domain mode.
5. If Time Domain mode is armed and an intrusion is detected with a high degree of certainty, then raise an alarm and return to step 2.
6. If Time Domain mode cannot be armed (i.e. is unstable) then attempt to arm Frequency Domain mode.
7. If Frequency Domain mode is armed and an intrusion is detected with a high degree of certainty then raise an alarm and return to step 2.
8. If Frequency Domain mode cannot be armed (i.e. is unstable) then enter Passive mode, only raise an alarm if an intrusion is detected in Passive mode with a high degree of certainty and do not attempt to rearm either of the other modes.

In the event that a window is left open in the vehicle, the interior space 11 of the vehicle can become unstable due to movement of air through the space and both the time domain and frequency domain modes may not be able to operate accurately. That can lead to repeated switching between the time domain and frequency domain modes so that neither system can stabilise. Where a steady state condition cannot be achieved after a predetermined time programmed into the microprocessor 10, the system will switch to the passive mode so that transmission of ultrasonic signals from the transmitter 15 ceases. The system will then remain in the passive mode so that it will detect the sound of breaking glass even though it will not operate in the time domain or frequency domain mode. This is advantageous over prior art systems which rely either on a time domain or frequency domain principle where neither system would operate correctly during unstable conditions in the vehicle and which could prevent the system being correctly armed or could give rise to a false indication of intrusion.

In the event of a window being broken and particularly if falling glass lies behind a shield such as a vehicle sheet, the time domain mode may not detect the breaking glass although it may well detect a deviation at the live filter 34. If the deviation is slight, it will cause the system to switch into frequency domain mode which should sense that a window has been broken as there will be a change in air pressure in the vehicle and movement of falling glass.

Whilst specific reference has been made to the system operating primarily in the time domain mode and then switching to the frequency domain mode to provide sampling where there is doubt over whether or not the intrusion could give rise to an alarm condition, it should be understood that the system could operate primarily in the frequency domain mode and then switch to time domain mode to validate an intrusion. In any event, where a first mode switches to a second mode for alternative signal sampling, the system will subsequently switch back to the initial mode for continued operation.

The system could be adapted such that it provides a two mode operation where in one mode the transmitter 15 transmits a signal for reflection and reception by the receiver 16, and where in the other mode the receiver becomes passive to enable breaking glass to be detected. E.g. the system operates primarily in the frequency domain mode and switches to passive mode.

The device can be switched remotely from a standby condition to an armed condition by using a hand held transmitter which emits an ultrasonic or other type of signal in the electromagnetic spectrum..

Instead of using the transmitter 15 to transmit an ultrasonic signal it could transmit an alternative radiated energy signal.

## Claims

1. A device for providing surveillance of a space comprising a transmitter (15) and a receiver (16), the device being arranged to operate in a first mode in which the transmitter transmits a signal into the space which is reflected from a surface and picked up by the receiver, processing means (10) for processing the received signal to provide a reference, comparator means for comparing the received signal with the reference and means for providing an indication when a significant change is detected, the device also being arranged to operate in a second mode in which the receiver picks up a different form of signal from the space for processing and comparison with a predetermined reference to determine whether an indication will be given, characterised in that a changeover from one mode to the other is effected only when the said change in the one mode does not provide sufficient certainty that said indication should be given and in that in the second mode the transmitter does not transmit a signal.

2. A device according to claim 1, in which in the first mode the transmitter transmits a signal as a series of pulses.

3. A device according to claim 2, in which the receiver (16) picks up reflected pulses and the processing means produces a reference pattern (33) to which a pattern (34) produced by subsequent reflected pulses is compared.

4. A device according to claim 3, in which the processing means (10) includes a first element (30) arranged to provide a reference pattern which remains substantially unaffected by sudden changes taking place within the space and a second element (32) arranged to provide a pattern which changes relatively quickly in response to sudden changes taking place within the space.

5. A device according to claim 3 or claim 4, in which the subsequent pattern (34) is compared with the reference pattern (33) after a time lapse has occurred from the transmitted pulse, said time lapse being sufficient for a directly coupled signal from the transmitter to the receiver substantially to cease.

6. A device according to any of claims 3 to 5, in which the timing between transmitted pulses is selected by the device such that a subsequent pulse is transmitted after and close to a point at which fluctuations forming part of the reference pattern produced by reception of the immediately preceding pulse substantially ceases or at a predetermined time thereafter.

7. A device according to any preceding claim in which the device is operable in a third mode in which the transmitter (15) is arranged to transmit its signal as a continuous signal or a relatively long burst of predetermined duration which is reflected from a surface and picked up by the receiver (16) for processing, said comparator means being arranged to compare the received and processed signal with a predetermined reference.

8. A device according to claim 1, in which in the first mode the transmitter (15) is arranged to transmit its signal as a continuous signal or a relatively long burst of predetermined duration which is reflected from a surface and picked up by the receiver (16) for processing, said comparator means being arranged to compare the received and processed signal with a predetermined reference level.

9. A device according to any preceding claim in which in the second mode the device becomes sensitive to a signal resulting from the sound of breaking or fracturing of brittle materials such as glass or high energy impacts on materials associated with the space.

10. A device for providing surveillance of a space comprising a transmitter (15) and a receiver (16), the device being arranged to operate in a first mode in which the transmitter transmits a continuous signal or relatively long burst of a predetermined duration into the space which is reflected from a surface and picked up by the receiver, processing means (10) for processing the received signal to provide a reference, comparator means for comparing a change in the received signal with the reference and means for providing an indication when a significant change is detected, the device also being arranged to operate in a second mode in which the transmitter (15) transmits a signal as a series of pulses which is reflected by a surface and picked up by the receiver (16) from the space for processing and comparison with a further reference such that where there is a change in the received signal which exceeds said further reference by a significant amount an indication will be given. characterised in that a changeover from one mode to the other is effected only when the said change in the one mode does not provide sufficient certainty that said indication should be given.

11. A device according to claim 10, including means for controlling the width and amplitude of each pulse of the series of pulses to optimise the amplitude and definition of the signal received in the second mode.

12. A device according to claim 10 or claim 11, including means for delaying the comparison of the received signal with the further reference by an automatically variable time lapse which has sufficient duration to permit a directly coupled signal from the transmitter to the receiver substantially to cease.

13. A device according to any of claims 10 to 12 in which the device is operable in a third mode in which no signal is transmitted by the transmitter (15) and the receiver (16) becomes passive to render the device sensitive to a signal resulting from the sound of breaking or fracturing of brittle materials such as glass or high energy impacts on materials associated with the space.

14. A device according to any preceding claim in which a plurality of receivers is provided for picking up signals transmitted from one or more transmitters.

15. A device according to any preceding claim, including a multiplexer operable to select whether a transducer for transmitting or receiving is used as the said transmitter or the said receiver.

16. A motor vehicle having a device according to any preceding claim for providing surveillance of a space within the vehicle.

17. A method of providing surveillance of a space comprising transmitting a signal into the space in a first mode for reflection from a surface, receiving and processing the reflected signal to provide a reference, comparing a subsequently received and processed signal with the reference and providing an indication when a significant change is detected and the method includes selecting a second mode, picking up a different form of signal from the space and comparing the received and processed signal with a predetermined reference to determine whether an indication should be given. characterised by the second mode being selected only where said change does not provide certainty that said indication should be given and the second mode being a mode in which a signal is not transmitted.

18. A method according to claim 17 including transmitting the signal as a series of pulses.

19. A method according to claim 18 including processing the received pulses so as to produce a reference pattern, and comparing the reference pattern with patterns generated by subsequent reflected pulses.

20. A method according to claim 19 including processing the reflected pulses so as to provide a reference pattern which is substantially unaffected by sudden changes taking place in the space and to provide a further pattern which changes relatively quickly in response to sudden changes taking place within the space.

21. A method according to claim 19, or claim 20 including creating a time lapse from cessation of the transmitted pulse to the time when a comparison with the reference pattern is made, said time lapse being sufficient for a directly coupled signal due to transmission substantially to cease.

22. A method according to any of claims 19 to 21 comprising, processing the reference pattern to establish a point in time at which the reflected signal returns to a substantially constant amplitude and transmitting a subsequent pulse close to a or at a predetermined time after the point.

23. A method according to claim 22 including sampling for a predetermined period, the reflected signal after each or a selected transmitted pulse, determining the gradient of a final portion of the sample and bringing forward the transmission time of the next pulse until the determination detects a gradient change and setting the sampling period and pulse interval accordingly.

24. A method according to any preceding method claim including operating the device in a third mode, the third mode operation including transmitting a continuous signal or a signal comprising relatively long burst of predetermined duration into the space for reflection, reception and processing and comparing the received signal with a predetermined reference.

25. A method according to claim 24 including selecting the third mode where the device is unable in a different mode to provide certainty that the said indication should be given.

26. A method according to claim 17 including transmitting in the first mode a continuous signal or a signal comprising a relatively long bursts of predetermined duration into the space for reflection, reception and processing to provide a further reference and comparing the received signal with the further reference.

27. A method according to claim 26 including analysing the frequency content of the received signal when amplitude modulated or phase modulated.

28. A method according to any preceding method claim including operating the device passively whereby the different form of received signal is a signal resulting from the sound of breaking or fracturing of brittle materials such as glass or high energy impacts on materials associated with the space.

29. A method of providing surveillance of a space comprising transmitting a signal as a series of pulses into the space in a first mode for reflection from a surface, receiving and processing the reflected signal to provide a first reference, comparing a subsequently received and processed signal with the reference and providing an indication when a significant change is detected, selecting a second mode, picking up a different form of signal from the space and processing that signal, comparing the received and processed signal with a predetermined reference and providing an indication where the reference is exceeded by a significant amount characterised by the second mode being selected only where said change does not provide certainty that said indication should be given.

30. A method according to claim 29 including operating the device in a third mode, the third mode operation including not transmitting a signal and operating the device passively whereby the different form of received signal is a signal resulting from the sound of breaking or fracturing or brittle materials such as glass or high energy impacts on materials associated with the space.

31. A method according to claim 29 or claim 30, including controlling the width and amplitude of each pulse of the series of pulses to optimise the amplitude and definition of the signal received in the first mode.

32. A method according to any of claims 29 to 31, including delaying the comparison of the received signal with the first reference by an automatically variable time lapse which has sufficient duration to permit a directly coupled signal from the transmitter to the receiver substantially to cease.

## Patentansprüche

1. Vorrichtung zum Bereitstellen von Überwachung eines Raums, mit einem Sender (15) und einem Empfänger (16), wobei die Vorrichtung ausgelegt ist, um in einem ersten Modus zu arbeiten, in dem der Sender in den Raum ein Signal abstrahlt, das von einer Fläche reflektiert und von dem Empfänger aufgefangen wird, Verarbeitungsmitteln (10) zum Verarbeiten des empfangenen Signals, um eine Referenz zu schaffen, Vergleichermitteln zum Vergleichen des empfangenen Signals mit der Referenz und Mitteln zum Liefern einer Anzeige bei Erfassung einer signifikanten Veränderung, wobei die Vorrichtung auch ausgelegt ist, um in einem zweiten Modus zu arbeiten, in dem der Empfänger aus dem Raum eine andere Form von Signal zum Verarbeiten und Vergleichen mit einer vorbestimmten Referenz auffängt, um zu bestimmen, ob eine Anzeige ausgegeben wird, dadurch gekennzeichnet, daß ein Umschalten von einem Modus zum anderen nur dann erfolgt, wenn die Veränderung in dem einen Modus keine ausreichende Gewißheit liefert, daß diese Anzeige ausgegeben werden sollte, und daß der Sender im zweiten Modus kein Signal abstrahlt.

2. Vorrichtung nach Anspruch 1, bei der im ersten Modus der Sender ein Signal als eine Reihe von Impulsen abstrahlt.

3. Vorrichtung nach Anspruch 2, bei der der Empfänger (16) reflektierte Impulse auffängt und das Verarbeitungsmittel ein Referenzmuster (33) erzeugt, mit dem ein von nachfolgenden reflektierten Impulsen erzeugtes Muster (34) verglichen wird.

4. Vorrichtung nach Anspruch 3, bei der das Verarbeitungsmittel (10) ein erstes Element (30), das ausgelegt ist, um ein Referenzmuster zu erzeugen, das von innerhalb des Raums stattfindenden plötzlichen Veränderungen im wesentlichen unbeeinflußt bleibt, und ein zweites Element (32) umfaßt, das ausgelegt ist, um ein Muster zu liefern, das sich als Reaktion auf innerhalb des Raums stattfindende plötzliche Veränderungen relativ schnell verändert.

5. Vorrichtung nach Anspruch 3 oder 4, bei der das nachfolgende Muster (34) mit dem Referenzmuster (33) verglichen wird, nachdem seit dem abgestrahlten Impuls eine Zeitspanne verstrichen ist, wobei die Länge der Zeitspanne ausreicht, um ein direkt angekoppeltes Signal von dem Sender zu dem Empfänger im wesentlichen aufhören zu lassen.

6. Vorrichtung nach einem der Ansprüche 3 bis 5, bei der die Taktung zwischen abgestrahlten Impulsen von der Vorrichtung derart gewählt wird, daß ein späterer Impuls nach oder in der Nähe eines Punktes abgestrahlt wird, bei dem Schwankungen, die Teil des durch den Empfang des unmittelbar vorhergehenden Impulses erzeugten Referenzmusters bilden, im wesentlichen aufhören, oder zu einem vorbestimmten Zeitpunkt danach.

7. Vorrichtung nach einem der vorhergehenden Ansprüche, bei der die Vorrichtung in einem dritten Modus betrieben werden kann, in dem der Sender (15) ausgelegt ist, um sein Signal als kontinuierliches Signal oder einen relativ langen Burst von vorbestimmter Dauer abzustrahlen, das bzw. der von einer Fläche reflektiert und von dem Empfänger (16) zur Verarbeitung aufgefangen wird, wobei Vergleichermittel ausgelegt sind, das empfangene und verarbeitete Signal mit einer vorbestimmten Referenz zu vergleichen.

8. Vorrichtung nach Anspruch 1, bei der im ersten Modus der Sender (15) ausgelegt ist, sein Signal als ein kontinuierliches Signal oder einen relativ langen Burst von vorbestimmter Dauer abzustrahlen, das bzw. der von einer Oberfläche reflektiert und von dem Empfänger (16) zur Verarbeitung aufgefangen wird, wobei die Vergleichermittel so ausgelegt sind, das empfangene und verarbeitete Signal mit einem vorbestimmten Referenzpegel zu vergleichen.

9. Vorrichtung nach einem der vorhergehenden Ansprüche, bei der im zweiten Modus die Vorrichtung für ein Signal empfindlich wird, das von dem Geräusch von spröden Materialien wie beispielsweise Glas, das bricht oder springt, oder von kräftigen Schlägen auf mit dem Raum verbundene Materialien herrührt.

10. Vorrichtung zum Bereitstellen von Überwachung eines Raums, mit einem Sender (15) und einem Empfänger (16), wobei die Vorrichtung ausgelegt ist, um in einem ersten Modus zu arbeiten, in dem der Sender in den Raum ein kontinuierliches Signal oder einen relativ langen Burst von vorbestimmter Dauer abstrahlt, das bzw. der von einer Fläche reflektiert und von dem Empfänger aufgefangen wird, Verarbeitungsmitteln (10) zum Verarbeiten des empfangenen Signals, um eine Referenz zu schaffen, Vergleichermitteln zum Vergleichen einer Veränderung beim empfangenen Signal mit der Referenz und Mitteln zum Liefern einer Anzeige bei Erfassung einer signifikanten Veränderung, wobei die Vorrichtung auch ausgelegt ist, um in einem zweiten Modus zu arbeiten, in dem der Sender (15) ein Signal in Form einer Reihe von Impulsen abstrahlt, das von einer Fläche reflektiert und zum Verarbeiten und Vergleichen mit einer weiteren Referenz von dem Empfänger (16) aus dem Raum aufgefangen wird, so daß bei Vorliegen einer Veränderung beim empfangenen Signal, die die weitere Referenz um einen signifikanten Wert übersteigt, eine Anzeige ausgegeben wird, dadurch gekennzeichnet, daß ein Umschalten von einem Modus zum anderen nur dann erfolgt, wenn die Veränderung in dem einen Modus keine ausreichende Gewißheit liefert, daß diese Anzeige ausgegeben werden sollte.

11. Vorrichtung nach Anspruch 10, mit Mitteln zum Steuern der Breite und Amplitude jedes Impulses der Serien von Impulsen, um die Amplitude und Definition des im zweiten Modus empfangenen Signals zu optimieren.

12. Vorrichtung nach Anspruch 10 oder 11, mit Mitteln zum Verzögern des Vergleichs des empfangenen Signals mit der weiteren Referenz um eine automatisch veränderliche Zeitspanne, die eine ausreichende Dauer aufweist, damit ein direkt von dem Sender zu dem Empfänger gekoppeltes Signal im wesentlichen aufhören kann.

13. Vorrichtung nach einem der Ansprüche 10 bis 12, bei der die Vorrichtung in einem dritten Modus betrieben werden kann, in dem von dem Sender (15) kein Signal abgestrahlt wird und der Empfänger (16) passiv wird, damit die Vorrichtung für ein Signal empfindlich wird, das von dem Geräusch von spröden Materialien wie beispielsweise Glas, das bricht oder springt, oder von kräftigen Schlägen auf mit dem Raum verbundene Materialien herrührt.

14. Vorrichtung nach einem der vorhergehenden Ansprüche, bei der mehrere Empfänger vorgesehen sind, um von einem oder mehreren Sendern abgestrahlte Signale aufzufangen.

15. Vorrichtung nach einem der vorhergehenden Ansprüche, mit einem Multiplexer, der betätigt werden kann, um zu wählen, ob ein Wandler zum Abstrahlen oder Empfangen als Sender oder als Empfänger verwendet wird.

16. Motorfahrzeug mit einer Vorrichtung nach einem der vorhergehenden Ansprüche zur Überwachung eines Raums innerhalb des Fahrzeugs.

17. Verfahren zum Überwachen eines Raums, das folgendes umfaßt: Abstrahlen eines Signals in den Raum in einem ersten Modus zur Reflexion von einer Fläche, Empfangen und Verarbeiten des reflektierten Signals zum Schaffen einer Referenz, Vergleichen eines später empfangenen und verarbeiteten Signals mit der Referenz und Liefern einer Anzeige bei Erfassung einer signifikanten Veränderung, und wobei das Verfahren folgendes umfasst: Auswählen eines zweiten Modus, Auffangen einer anderen Form von Signal aus dem Raum und Vergleichen des empfangenen und verarbeiteten Signals mit einer vorbestimmten Referenz, um zu bestimmen, ob eine Anzeige ausgegeben werden sollte, dadurch gekennzeichnet, daß der zweite Modus nur dann gewählt wird, wenn die Änderung keine Gewißheit liefert, daß die Anzeige ausgegeben werden sollte, und wobei der zweite Modus ein Modus ist, in dem kein Signal abgestrahlt wird.

18. Verfahren nach Anspruch 17, mit dem Abstrahlen des Signals als eine Reihe von Impulsen.

19. Verfahren nach Anspruch 18, mit dem Verarbeiten der empfangenen Impulse, um ein Referenzmuster zu erzeugen, und dem Vergleichen des Referenzmusters mit von späteren reflektierten Impulsen erzeugten Mustern.

20. Verfahren nach Anspruch 19, mit dem Verarbeiten der reflektierten Impulse, um ein Referenzmuster zu liefern, das von den im Raum stattfindenden plötzlichen Veränderungen im wesentlichen unbeeinflußt bleibt, und um ein weiteres Muster zu liefern, das sich als Reaktion auf innerhalb des Raums stattfindende plötzliche Veränderungen relativ schnell verändert.

21. Verfahren nach Anspruch 19 oder 20, mit dem Erzeugen einer Zeitspanne ab dem Aufhören des abgestrahlten Impulses bis zu dem Zeitpunkt, wenn ein Vergleich mit dem Referenzmuster durchgeführt wird, wobei die Länge der Zeitspanne ausreicht, ein aufgrund der Abstrahlung direkt angekoppeltes Signal im wesentlichen aufhören zu lassen.

22. Verfahren nach einem der Ansprüche 19 bis 21, das folgendes umfaßt: Verarbeiten des Referenzmusters zum Festlegen eines Zeitpunktes, zu dem das reflektierte Signal zu einer im wesentlichen konstanten Amplitude zurückkehrt, und Abstrahlen eines späteren Impulses in der Nähe oder um eine vorbestimmte Zeit nach dem Punkt.

23. Verfahren nach Anspruch 22, mit dem Abtasten des reflektierten Signals nach jedem oder einem ausgewählten abgestrahlten Impuls über eine vorbestimmte Periode, Bestimmen des Gradienten eines Endteils des Abtastwerts und Vorziehen der Sendezeit des nächsten Impulses, bis die Bestimmung eine Gradientenveränderung erfaßt, und dementsprechendem Einstellen der Abtastperiode und des Impulsintervals.

24. Verfahren nach einem der vorhergehenden Verfahrensansprüche, mit dem Betreiben der Vorrichtung in einem dritten Modus, wobei der Betrieb im dritten Modus folgendes einschließt: Abstrahlen eines kontinuierlichen Signals oder eines Signals, das aus relativ langen Bursts vorbestimmter Dauer besteht, in den Raum, um reflektiert, empfangen und verarbeitet zu werden, und Vergleichen des empfangenen Signals mit einer vorbestimmten Referenz.

25. Verfahren nach Anspruch 24, mit dem Auswählen des dritten Modus, wenn die Vorrichtung in einem anderen Modus nicht in der Lage ist, Gewißheit darüber zu liefern, daß die Anzeige abgegeben werden sollte.

26. Verfahren nach Anspruch 17, mit dem Senden, im ersten Modus, eines kontinuierlichen Signals oder eines Signals, das aus relativ langen Bursts vorbestimmter Dauer besteht, in den Raum, um reflektiert, empfangen und verarbeitet zu werden, damit eine weitere Referenz geliefert wird, und Vergleichen des empfangenen Signals mit der weiteren Referenz.

27. Verfahren nach Anspruch 26, mit dem Analysieren des Frequenzinhalts des empfangenen Signals, wenn es amplitudenmoduliert oder phasenmoduliert ist.

28. Verfahren nach einem der vorhergehenden Verfahrensansprüche, mit dem passiven Betreiben der Vorrichtung, wodurch die andere Form von empfangenem Signal ein Signal ist, das von dem Geräusch von spröden Materialien wie beispielsweise Glas, das bricht oder springt, oder von kräftigen Schlägen auf mit dem Raum verbundene Materialien herrührt.

29. Verfahren zum Überwachen eines Raums, das folgendes umfaßt: Abstrahlen eines Signals als eine Reihe von Impulsen in den Raum in einem ersten Modus zur Reflektion von einer Fläche, Empfangen und Verarbeiten des reflektierten Signals, um eine erste Referenz zu liefern, Vergleichen eines später empfangenen und verarbeiteten Signals mit der Referenz und Liefern einer Anzeige bei Erfassung einer signifikanten Veränderung, Auswählen eines zweiten Modus, Auffangen einer anderen Form von Signal aus dem Raum und Verarbeiten dieses Signals, Vergleichen des empfangenen und verarbeiteten Signals mit einer vorbestimmten Referenz und liefern einer Anzeige, wenn die Referenz um einen signifikanten Wert überstiegen wird, dadurch gekennzeichnet, daß der zweite Modus nur dann gewählt wird, wenn die Veränderung keine Gewißheit liefert, daß die Anzeige ausgegeben werden sollte.

30. Verfahren nach Anspruch 29, mit dem Betreiben der Vorrichtung in einem dritten Modus, wobei der Betrieb im dritten Modus folgendes einschließt: kein Signal abzustrahlen und die Vorrichtung passiv zu betreiben, wodurch die andere Form von empfangenem Signal ein Signal ist, das von dem Geräusch von spröden Materialien wie beispielsweise Glas, das bricht oder springt, oder von kräftigen Schlägen auf mit dem Raum verbundene Materialien herrührt.

31. Verfahren nach Anspruch 29 oder 30, mit dem Steuern der Breite und Amplitude jedes Impulses der Serien von Impulsen, um die Amplitude und Definition des im ersten Modus empfangenen Signals zu optimieren.

32. Verfahren nach einem der Ansprüche 29 bis 31, mit dem Verzögern des Vergleichs des empfangenen Signals mit der ersten Referenz um eine automatisch veränderliche Zeitspanne, wobei die Länge der Zeitspanne ausreicht, ein direkt angekoppeltes Signal vom Sender zum Empfänger im wesentlichen aufhören zu lassen.

## Revendications

1. Dispositif pour assurer la surveillance d'un espace comprenant un émetteur (15) et un récepteur (16), le dispositif étant prévu pour fonctionner dans un premier mode dans lequel l'émetteur émet dans l'espace un signal qui est réfléchi à partir d'une surface et capté par le récepteur, un moyen de traitement (10) pour traiter le signal reçu en vue de fournir une référence, un moyen de comparateur pour comparer le signal reçu à la référence et un moyen pour fournir une indication au moment où un changement considérable est détecté, le dispositif étant également prévu pour fonctionner dans un deuxième mode dans lequel le récepteur capte à partir de l'espace une forme différente de signal à traiter et à comparer à une référence prédéterminée pour déterminer si une indication sera donnée, caractérisé en ce qu'une permutation d'un mode à l'autre est effectuée uniquement quand ledit changement dans le premier mode ne fournit pas de certitude suffisante que ladite indication devrait être donnée et en ce que dans le deuxième mode l'émetteur n'émet pas de signal.

2. Dispositif selon la revendication 1, dans lequel dans le premier mode, l'émetteur émet un signal sous forme de série d'impulsions.

3. Dispositif selon la revendication 2, dans lequel le récepteur (16) capte les impulsions réfléchies et le moyen de traitement produit un diagramme de référence (33) auquel un diagramme (34) produit par des impulsions réfléchies ultérieures est comparé.

4. Dispositif selon la revendication 3, dans lequel le moyen de traitement (10) comporte un premier élément (30) prévu pour fournir un diagramme de référence qui reste substantiellement non affecté par des changements soudains se produisant à l'intérieur de l'espace et un deuxième élément (32) prévu pour fournir un diagramme qui change relativement rapidement en réponse à des changements soudains se produisant à l'intérieur de l'espace.

5. Dispositif selon la revendication 3 ou la revendication 4, dans lequel le diagramme ultérieur (34) est comparé au diagramme de référence (33) après qu'un laps de temps se soit écoulé depuis l'impulsion émise, ledit laps de temps étant suffisant pour que cesse substantiellement un signal directement couplé de l'émetteur au récepteur.

6. Dispositif selon l'une quelconque des revendications 3 à 5, dans lequel la temporisation entre les impulsions émises est sélectionnée par le dispositif de telle sorte qu'une impulsion ultérieure soit émise après et proche d'un point auquel les fluctuations faisant partie du diagramme de référence produit par la réception de l'impulsion immédiatement précédente cessent substantiellement ou à un temps prédéterminé après cela.

7. Dispositif selon l'une quelconque des revendications précédentes dans lequel le dispositif peut fonctionner dans un troisième mode dans lequel l'émetteur (15) est prévu pour émettre son signal sous forme de signal continu ou de salve relativement longue de durée prédéterminée qui est réfléchi à partir d'une surface et capté par le récepteur (16) pour être traité, ledit moyen de comparateur étant prévu pour comparer le signal reçu et traité à une référence prédéterminée.

8. Dispositif selon la revendication 1, dans lequel dans le premier mode, l'émetteur (15) est prévu pour émettre son signal sous forme de signal continu ou de salve relativement longue de durée prédéterminée, qui est réfléchi à partir d'une surface et capté par le récepteur (16) pour être traité, ledit moyen de comparateur étant prévu pour comparer le signal reçu et traité à un niveau de référence prédéterminé.

9. Dispositif selon l'une quelconque des revendications précédentes, dans lequel dans le deuxième mode, le dispositif devient sensible à un signal résultant du son du bris ou de la fracture de matériaux cassants tels que le verre ou d'impacts de haute énergie sur des matériaux associés à l'espace.

10. Dispositif pour assurer la surveillance d'un espace comprenant un émetteur (15) et un récepteur (16), le dispositif étant prévu pour fonctionner dans un premier mode dans lequel l'émetteur émet un signal continu ou une salve relativement longue d'une durée prédéterminée dans l'espace, qui est réfléchi à partir d'une surface et capté par le récepteur, un moyen de traitement (10) pour traiter le signal reçu en vue de fournir une référence, un moyen de comparateur pour comparer un changement du signal reçu à la référence et un moyen pour fournir une indication au moment où un changement considérable est détecté, le dispositif étant également prévu pour fonctionner dans un deuxième mode dans lequel l'émetteur (15) émet un signal sous forme de série d'impulsions qui est réfléchi par une surface et capté par le récepteur (16) à partir de l'espace et est destiné à être traité et comparé à une autre référence de telle sorte qu'en cas de changement du signal reçu dépassant ladite autre référence d'une quantité considérable une indication soit donnée, caractérisé en ce qu'une permutation d'un mode à l'autre est effectuée uniquement quand ledit changement dans le premier mode ne fournit pas de certitude suffisante que ladite indication devrait être donnée.

11. Dispositif selon la revendication 10, comportant un moyen pour commander la largeur et l'amplitude de chaque impulsion de la série d'impulsions pour optimiser l'amplitude et la définition du signal reçu dans le deuxième mode.

12. Dispositif selon la revendication 10 ou la revendication 11, comportant un moyen pour retarder la comparaison du signal reçu à l'autre référence d'un laps de temps automatiquement variable qui a une durée suffisante pour permettre à un signal couplé directement de l'émetteur au récepteur de cesser substantiellement.

13. Dispositif selon l'une quelconque des revendications 10 à 12, dans lequel le dispositif peut fonctionner dans un troisième mode dans lequel aucun signal n'est émis par l'émetteur (15) et le récepteur (16) devient passif pour rendre le dispositif sensible à un signal résultant du son du bris ou de la fracture de matériaux cassants tels que du verre ou d'impacts de haute énergie sur des matériaux associés à l'espace.

14. Dispositif selon l'une quelconque des revendications précédentes, dans lequel une pluralité de récepteurs est fournie pour capter les signaux émis par un ou plusieurs émetteurs.

15. Dispositif selon l'une quelconque des revendications précédentes, comportant un multiplexeur fonctionnant pour sélectionner l'utilisation d'un transducteur pour l'émission ou la réception comme dit émetteur ou dit récepteur.

16. Véhicule automobile ayant un dispositif selon l'une quelconque des revendications précédentes pour assurer la surveillance d'un espace à l'intérieur du véhicule.

17. Procédé pour assurer la surveillance d'un espace comprenant l'émission dans l'espace dans un premier mode, d'un signal destiné à être réfléchi par une surface, la réception et le traitement du signal réfléchi pour fournir une référence, la comparaison d'un signal ultérieurement reçu et traité à la référence et la fourniture d'une indication au moment où un changement considérable est détecté et le procédé comporte la sélection d'un deuxième mode, le captage d'une forme différente de signal à partir de l'espace et la comparaison du signal reçu et traité à une référence prédéterminée pour déterminer si une indication devrait être donnée, caractérisé en ce que le deuxième mode est sélectionné uniquement quand ledit changement ne fournit pas de certitude que ladite indication devrait être donnée et en ce que le deuxième mode est un mode dans lequel un signal n'est pas émis.

18. Procédé selon la revendication 17, comportant l'émission du signal sous forme de série d'impulsions.

19. Procédé selon la revendication 18, comportant le traitement des impulsions reçues de manière à produire un diagramme de référence, et la comparaison du diagramme de référence à des diagrammes générés par des impulsions réfléchies ultérieures.

20. Procédé selon la revendication 19, comportant le traitement des impulsions réfléchies de manière à fournir un diagramme de référence qui reste substantiellement non affecté par des changements soudains se produisant dans l'espace et pour fournir un autre diagramme qui change relativement rapidement en réponse à des changements soudains se produisant à l'intérieur de l'espace.

21. Procédé selon la revendication 19, ou la revendication 20, comportant la création d'un laps de temps entre la fin de l'impulsion émise et le temps où une comparaison au diagramme de référence est faite, ledit laps de temps étant suffisant pour que cesse substantiellement un signal directement couplé dû à l'émission.

22. Procédé selon l'une quelconque des revendications 19 à 21, comprenant le traitement du diagramme de référence pour établir un point dans le temps où le signal réfléchi revient à une amplitude substantiellement constante et l'émission d'une impulsion ultérieure proche du point ou à un temps prédéterminé après celui-ci.

23. Procédé selon la revendication 22, comportant l'échantillonnage pendant une période prédéterminée, du signal réfléchi après chaque impulsion émise ou une impulsion émise sélectionnée, la détermination d'un gradient d'une partie finale de l'échantillon et l'avancée dans le temps du temps d'émission de l'impulsion suivante jusqu'à ce que la détermination détecte un changement de gradient et l'établissement de la période d'échantillonnage et de l'intervalle d'impulsions en conséquence.

24. Procédé selon l'une quelconque des revendications de procédé précédentes comportant le fonctionnement du dispositif dans un troisième mode, le fonctionnement dans le troisième mode comportant l'émission d'un signal continu ou d'un signal comprenant une salve relativement longue de durée prédéterminée dans l'espace, destiné à être réfléchi, la réception et le traitement et la comparaison du signal reçu à une référence prédéterminée.

25. Procédé selon la revendication 24, comportant la sélection du troisième mode lorsque le dispositif est incapable dans un mode différent de fournir la certitude que ladite indication devrait être donnée.

26. Procédé selon la revendication 17, comportant l'émission dans l'espace dans le premier mode d'un signal continu ou d'un signal comprenant des salves relativement longues de durée prédéterminée et destiné à être réfléchi, la réception et le traitement pour fournir une autre référence et la comparaison du signal reçu à l'autre référence.

27. Procédé selon la revendication 26, comportant l'analyse des composantes fréquentielles du signal reçu quand il est modulé en amplitude ou modulé en phase.

28. Procédé selon l'une quelconque des revendications de procédé précédentes, comportant le fonctionnement du dispositif de manière passive par laquelle la forme différente du signal reçu est un signal résultant du son du bris ou de la fracture de matériaux cassants tels que du verre ou d'impacts de haute énergie sur des matériaux associés à l'espace.

29. Procédé pour assurer la surveillance d'un espace comprenant l'émission dans l'espace d'un signal sous forme de série d'impulsions dans un premier mode, destiné à être réfléchi par une surface, la réception et le traitement du signal réfléchi pour fournir une première référence, la comparaison d'un signal ultérieurement reçu et traité à la référence et la fourniture d'une indication au moment où un changement considérable est détecté, la sélection d'un deuxième mode, le captage à partir de l'espace d'une forme différente de signal et le traitement de ce signal, la comparaison du signal reçu et traité à une référence prédéterminée et la fourniture d'une indication lorsque la référence est dépassée par une quantité considérable, caractérisé en ce que le deuxième mode est sélectionné uniquement quand ledit changement ne fournit pas de certitude que ladite indication devrait être donnée.

30. Procédé selon la revendication 29, comportant le fonctionnement du dispositif dans un troisième mode, le fonctionnement dans le troisième mode comportant la non-émission d'un signal et le fonctionnement du dispositif de manière passive par laquelle la forme différente du signal reçu est un signal résultant du son du bris ou de la fracture de matériaux cassants tels que du verre ou d'impacts de haute énergie sur des matériaux associés à l'espace.

31. Procédé selon la revendication 29 ou la revendication 30, comportant la commande de la largeur et de l'amplitude de chaque impulsion de la série d'impulsions pour optimiser l'amplitude et la définition du signal reçu dans le premier mode.

32. Procédé selon l'une quelconque des revendications 29 à 31, comportant le retard de la comparaison du signal reçu à la première référence d'un laps de temps automatiquement variable qui a une durée suffisante pour permettre à un signal couplé directement de l'émetteur au récepteur de cesser substantiellement.
